# EUROPEAN PATENT APPLICATION

(11) **EP 4 487 950 A1**
(43) Date of publication of application: **08.01.2025**
(21) Application number: 23886389.8
(22) Date of filing: 03.11.2023
(51) Int. Cl.: B01J 23/847, B01J 21/04, B01J 21/18, B01J 35/60, B01J 37/02, B01J 37/08, B01J 37/16, C01B 32/162

(54) **CATALYST FOR PRODUCING CARBON NANOTUBES, AND METHOD FOR PRODUCING CATALYST FOR PRODUCING CARBON NANOTUBES**

(30) Priority: 03.11.2022 KR 20220145311
(71) Applicant: LG Chem, Ltd., Yeongdeungpo-gu Seoul 07336 (KR)
(72) Inventor: PARK, Hun Min, Daejeon 34122 (KR); JANG, Hyung Sik, Daejeon 34122 (KR); KANG, Hyun Joon, Daejeon 34122 (KR); KIM, Se Hyun, Daejeon 34122 (KR)
(74) Representative: Goddar, Heinz J.
(86) International application number: PCT/KR2023/017570
(87) International publication number: WO 2024/096695

(57) **Abstract**

The present invention relates to a catalyst for preparing carbon nanotubes where a catalyst component is supported on a support coated with carbon, and a method for preparing the catalyst for preparing carbon nanotubes.

## Description

### TECHNICAL FIELD

### Cross-reference to Related Application

This application claims the benefit of Korean Patent Application No. 10-2022-0145311, filed on November 3, 2022, in the Korean Intellectual Property Office, the disclosure of which is incorporated herein in its entirety by reference.

### Technical Field

The present invention relates to a catalyst for preparing carbon nanotubes, which exhibits high productivity, and a method for preparing a catalyst for preparing carbon nanotubes.

### BACKGROUND ART

Carbon nanomaterials are categorized by their shape: fullerenes, carbon nanotubes (CNTs), graphene, and graphite nanoplates, and in particular, the carbon nanotubes are macromolecules made out of nano-sized, rolled-up sheets of graphite with the hexagonal honeycomb network where one carbon atom is coupled with three carbon atoms.

The carbon nanotubes are lightweight due to their inner hollow space, and have electrical conductivity as good as that of copper, thermal conductivity as good as that of diamond, and tensile strength as good as that of steel. The carbon nanotubes are also categorized by how they are rolled up: single-walled carbon nanotubes (SWCNTs), multi-walled carbon nanotubes (MWCNTs), or rope carbon nanotubes.

Lately, research on carbon nanotube synthesis techniques for synthesizing a great deal of carbon nanotubes at a time has been actively ongoing, and among various methods, chemical vapor deposition (CVD) using a fluidized bed reactor enables a large amount of carbon nanotubes to be synthesized with ease, and thus has been considered to be the most preferred choice in real industrial fields.

Specifically, in the method of chemical vapor deposition, a catalyst for preparing carbon nanotubes in the form of particles is charged into the fluidized bed reactor, and then carbon source gases and flowing gases are injected into the fluidized bed reactor to suspend the catalyst. Thereafter, the reactor is heated to decompose the carbon source gases on a surface of the suspended catalyst, resulting in synthesized carbon nanotubes.

In the process of preparing carbon nanotubes using this chemical vapor deposition method, the activity of the catalyst serves as a primary factor in determining the productivity of the overall manufacturing process, and accordingly, active research on catalysts with higher activity and methods for preparing the catalysts is underway. For example, it is known that a catalyst may have a further increase in activity in a way of supporting a greater amount of a main catalyst component on a support or supporting a cocatalyst component together. However, when an excessive amount of the main catalyst component is supported along with the cocatalyst, there is a limitation in that the cocatalyst inhibits the dispersibility of the main catalyst component, and there is a limitation in a method of increasing the catalytic activity by increasing the amount of the main catalyst supported. In addition, when the catalyst is supported on the support, the catalyst has degradation in performance due to strong bonding between the support and the catalyst.

Accordingly, there is a need for further research on a method capable of further improving the activity of a catalyst for preparing carbon nanotubes.

### Related Art Document

(Patent Document 1) Korean Patent Laid-Open Publication No. 10-2015-0007266

### DISCLOSURE OF THE INVENTION

### TECHNICAL PROBLEM

An aspect of the present invention provides a method for preparing a catalyst for preparing carbon nanotubes, which has improved production of carbon nanotubes per unit catalyst.

### TECHNICAL SOLUTION

To address the above-described tasks, the present invention provides a catalyst for preparing carbon nanotubes and a method for preparing the catalyst for preparing carbon nanotubes.
[1] According to an aspect of the present invention, there is provided a catalyst for preparing carbon nanotubes, the catalyst including a support coated with carbon, and a main catalyst component and a cocatalyst component supported on the support, wherein the support includes a carbon coating in an amount of 0.1 to 3.0 parts by weight with respect to 100 parts by weight of the support.
[2] The present invention provides the catalyst according to [1] above, wherein the support coated with carbon has a BET specific surface area of 70 to 150 m²/g.
[3] The present invention provides the catalyst according to [1] or [2] above, wherein the support coated with carbon has a pore volume of 0.18 to 0.30 cm³/g.
[4] The present invention provides the catalyst according to any one of [1] to [3] above, wherein the support coated with carbon includes a carbon coating in an amount of 0.1 to 2.0 parts by weight with respect to 100 parts by weight of the support.
[5] The present invention provides the catalyst according to any one of [1] to [4] above, wherein the catalyst for preparing carbon nanotubes has a specific surface area of 50 to 90 m²/g.
[6] According to another aspect of the present invention, there is provided a method for preparing a catalyst for preparing carbon nanotubes, which includes (S1) immersing a carbon source in a support, (S2) firing the support in which the carbon source is immersed to prepare a carbon-coated support, (S3) mixing the carbon-coated support and a catalyst supporting solution to prepare a mixture, and (S4) firing the mixture to prepare a supported catalyst, wherein the firing temperature in step (S2) is 450 to 950 °C.
[7] The present invention provides the method according to [6] above, wherein the carbon source is at least one selected from the group consisting of C₄ to C₂₀ carboxylic acid, glucose, lactose, glucose, cellulose, sucrose, sugar polymer, carbohydrate, urea, thiourea, ethylene glycol, and glycerol.
[8] The present invention provides the method according to [6] or [7] above, wherein the step (S1) includes (S1-1) mixing a support and a solution containing a carbon source, and (S1-2) drying the mixture obtained in the above step.
[9] The present invention provides the method according to any one of [6] to [8] above, wherein the drying in step (S1-2) is performed at a temperature of 50 to 200 ° C.
[10] The present invention provides the method according to any one of [6] to [9] above, wherein the carbon-coated support prepared through the firing in step (S2) includes a carbon coating in an amount of 0.1 to 3.0 parts by weight with respect to 100 parts by weight of the support.
[11] The present invention provides the method according to any one of [6] to [10] above, wherein the firing in step (S2) is performed in a reducing atmosphere.
[12] The present invention provides the method according to [6] to [11] above, wherein the step (S3) includes (S3-1) mixing the carbon-coated support and a catalyst supporting solution to prepare a mixture, and (S3-2) drying the mixture.
[13] The present invention provides the method according to any one of [6] to [12] above, wherein the drying in step (S3-2) is performed at a temperature of 50 to 200 ° C.
[14] The present invention provides the method according to any one of [6] to [13] above, wherein the firing in step (S4) is performed in a reducing atmosphere.
[15] The present invention provides the method according to any one of [6] to [14] above, wherein the firing temperature in step (S4) is 300 to 800 °C.

### ADVANTAGEOUS EFFECTS

When carbon nanotubes are prepared using a catalyst prepared through a preparation method of the present invention, more carbon nanotubes may be prepared with excellent yield.

### BRIEF DESCRIPTION OF THE DRAWINGS

FIG. 1 is a graph showing a BET specific surface area according to firing temperature during carbon coating of carbon-coated supports prepared in Examples 1 to 4 and Comparative Examples 1 and 2;
FIG. 2 is a graph showing carbon content according to firing temperature during carbon coating of carbon-coated supports prepared in Examples 1 to 4 and Comparative Examples 1 and 2;
FIG. 3 is a graph showing pore volume according to firing temperature during carbon coating of carbon-coated supports prepared in Examples 1 to 4 and Comparative Examples 1 and 2;
FIG. 4 is a graph showing a BET specific surface area of carbon nanotubes synthesized using catalysts prepared in Examples 1 to 4 and Comparative Examples 1 and 2;
FIG. 5 is a graph showing bulk density of carbon nanotubes synthesized using catalysts prepared in Examples 1 to 4 and Comparative Examples 1 and 2; and
FIG. 6 is a graph showing yield when carbon nanotubes are synthesized using catalysts prepared in Examples 1 to 4 and Comparative Examples 1 and 2.

### MODE FOR CARRYING OUT THE INVENTION

Hereinafter, the present invention will be described in more detail.

It will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

The term "carbon nanotubes" as used herein refers to a secondary structure formed by aggregating carbon nanotube units such that carbon nanotube units are fully or partially bundled, and the carbon nanotube units have graphite sheets in a cylinder form with nano-sized diameters and having an sp2 bond structure. In this case, the carbon nanotubes may exhibit characteristics of a conductor or semiconductor depending on a structure and an angle at which the graphite sheet is rolled. The carbon nanotube units may be divided into single-walled carbon nanotubes (SWCNTs), double-walled carbon nanotubes (DWCNTs), and multi-walled carbon nanotubes (MWCNTs), depending on the number of bonds that form the walls, and the thinner the wall, the lower the resistance.

The carbon nanotubes of the present invention may include any one or two or more of single-walled, double-walled, and multi-walled carbon nanotube units.

### Catalyst for preparing carbon nanotubes

A catalyst used for the synthesis of carbon nanotubes through chemical vapor deposition may be prepared in the form of solid particles using various methods, but is generally prepared using a supporting method in which a metal component is supported on a support. Particularly, a method for preparing a catalyst using the supporting method enables a large amount of catalyst to be prepared in a shorter period of time than a method for preparing a catalyst using physical or chemical deposition, and has been most widely used in the industrial field because the costs for preparing the catalyst is low and the activity of the catalyst itself is also excellent. Furthermore, recently, while a catalyst is prepared by using the supporting method, a method for supporting a cocatalyst component for improving the activity of the catalyst component along with a main catalyst component is preferred.

However, in the case of the catalyst prepared by using the supporting method, since there is a limit to the amount of the catalyst that may be supported according to physical properties of the support itself, it is not easy to increase the catalytic activity to at least a certain degree. In addition, bond between the support and the catalyst may reduce the activity, and accordingly, a method capable of increasing the activity of the catalyst supported on the support needs to be developed.

Accordingly, a catalyst for preparing carbon nanotubes of the present invention uses a support coated with an appropriate amount of carbon as a support on which catalyst particles are supported to allow the catalyst particles to be properly dispersed in the support, and may thus exhibit improvements in the yield of the catalyst.

Specifically, the catalyst for preparing carbon nanotubes of the present invention includes a support coated with carbon, and a main catalyst component and a cocatalyst component supported on the support, and the support includes a carbon coating in an amount of 0.1 to 3.0 parts by weight with respect to 100 parts by weight of the support.

In the support coated with carbon, the support may be one or more metal oxides or hydroxides selected from the group consisting of aluminum, magnesium, calcium, and silicon, and may specifically be aluminum oxide or aluminum hydroxide, and may more specifically be boehmite. Since the metal oxides have porosity and a large specific surface area, the metal oxides may exhibit high catalytic activity when a catalyst component is supported, and also have excellent mechanical strength, and thus a phenomenon such as the collapse of particles of the catalyst in the process of preparing carbon nanotubes may be prevented. In particular, the aluminum oxide allows the catalyst component to be easily supported and has excellent durability, and thus is preferred.

The shape of the support is not particularly limited, but may be spherical or in the form of potato. In addition, the support may have a porous structure, a molecular sieve structure, a honeycomb structure, or the like so as to have a relatively high surface area per unit mass or unit volume.

In the support coated with carbon, the carbon may be applied onto a surface and pores of the support. The support coated with carbon may include a carbon coating in an amount of 0.1 to 3.0 parts by weight, specifically 0.1 to 2.0 parts by weight, and more specifically 0.5 to 1.5 parts by weight, with respect to 100 parts by weight of the support coated with carbon. When the amount of carbon coating of the support coated with carbon satisfies the above range, the catalyst for preparing carbon nanotubes has appropriate pores and excellent catalyst dispersibility, and may thus exhibit excellent carbon nanotube preparation yield. When the amount of carbon coating is too small, the effect of improving carbon nanotube yield is insufficient, and when the amount of the carbon coating is excessive, the pores of the support may be blocked and the dispersibility of the supported catalyst may be degraded. The amount of carbon coating refers to an amount of carbon applied onto the support.

The support coated with carbon may have a BET specific surface area of 70 to 600 m²/g, specifically 70 to 500 m²/g, 70 to 400 m²/g, 70 to 300 m²/g, 75 to 300 m²/g, 75 to 200 m²/g, and may more specifically be 75 to 150 m²/g. The specific surface area may be measured through a BET method, and more specifically, may be calculated from the nitrogen gas adsorption amount under the liquid nitrogen temperature (77K) by using BELSORP-mini II from BEL Japan, Inc.

In addition, the support coated with carbon may have a pore volume of 0.18 to 0.30 cm³/g, specifically 0.18 to 0.28 cm³/g, more specifically 0.20 to 0.25 cm³/g.

The carbon coating of the support may be prepared by supporting a carbon source on a support and then firing the support on which the carbon source is supported. The firing the support on which the carbon source is supported allows the carbon coating to be formed on the surface and pores of the support.

The carbon source may be an organic acid, and the organic acid may be, for example, a multicarboxylic acid. The multicarboxylic acid is a compound containing one or more carboxyl groups, and may be at least one selected from dicarboxylic acid, tricarboxylic acid, and tetracarboxylic acid, and for example, citric acid, oxalic acid, malonic acid, succinic acid, tartaric acid, or the like may be used.

The main catalyst component may be at least one selected from the group consisting of Co, Ni, and Fe, and preferably Co. The main catalyst component serves to lower the activation energy of the reaction of forming carbon nanotubes through decomposition of carbon source gases for preparing carbon nanotubes so that the reaction is performed well, and the main catalyst components listed above provide benefits such as high catalytic activity and excellent durability.

The cocatalyst component may be at least one selected from the group consisting of Mo and V, and preferably V. The cocatalyst component serves to increase the dispersibility of the main catalyst component to further increase the activity of a catalyst, and benefits are that the cocatalyst components listed above have a high synergistic effect with the cocatalyst components described above and are easily supported on the support.

The catalyst for preparing carbon nanotubes according to an embodiment of the present invention may have a specific surface area of 50 to 90 m²/g, specifically 50 to 85 m²/g, more specifically 50 to 80 m²/g.

The catalyst for preparing carbon nanotubes prepared according to an embodiment of the present invention may have a main catalyst component in an amount of 5 wt% to 20 wt%, preferably 10 wt% to 15 wt%. The amount of the main catalyst component may be calculated by dividing the mass of the main catalyst component in a main catalyst precursor introduced during the preparation process by the mass of a finally obtained catalyst, and separately, may also be calculated by measuring the amount of the main catalyst component in catalyst particles through ICP-OES analysis.

A molar ratio between the main catalyst component and the cocatalyst component may be 10:0.1 to 10:10, preferably 10:0.5 to 10:5. When the molar ratio between the main catalyst component and the cocatalyst component satisfies the above-described conditions, the synergistic effect between the two components may be maximized, and specifically, aggregation of active components in the support may be minimized to maximize the activity of catalyst.

### Method for preparing catalyst for preparing carbon nanotubes

A method for preparing a catalyst for preparing carbon nanotubes of the present invention includes first preparing a support coated with carbon, and then supporting a catalyst and a cocatalyst on the prepared support coated with carbon to prepare a supported catalyst for preparing carbon nanotubes.

Specifically, the supported catalyst for preparing carbon nanotubes of the present invention may be prepared through the method for preparing a catalyst for preparing carbon nanotubes, the method including (S1) immersing a carbon source in a support, (S2) firing the support in which the carbon source is immersed to prepare a support coated with carbon, (S3) mixing the support coated with carbon and a catalyst supporting solution to prepare a mixture, and (S4) firing the mixture to prepare a supported catalyst, wherein the firing temperature in step (S2) is 450 to 950 °C.

### (S1) Immersing carbon source in support

In step S1, a carbon source is immersed in a support. In an example of the present invention, the carbon source may be immersed in the support by mixing the support with a solution containing the carbon source.

The support may be one or more metal oxides or hydroxides selected from the group consisting of aluminum, magnesium, calcium, and silicon, and may specifically be aluminum oxide or aluminum hydroxide, and may more specifically be boehmite.

The support may have a specific surface area of 100 m²/g to 1,000 m²/g, preferably 150 m²/g to 600 m²/g. When the specific surface area of the support is in the above-described range, benefits are that the activity of the catalyst may be increased and the durability may also be maintained at an satisfactory level.

The support may have a D₅₀ of 10 µm to 70 pm, a D₉₀ of 20 µm to 90 pm, preferably, a D₅₀ of 20 µm to 60 µm, and a D₉₀ of 30 µm to 80 µm. In addition, the support may have a bulk density of 300 kg/m³ to 1,200 kg/m³, and preferably a bulk density of 500 kg/m³ to 1,000 kg/m³. When the physical properties of the support satisfy the above-described range, the durability of a catalyst including the support may be excellent, and the size and physical properties of carbon nanotubes prepared from the catalyst may also be excellent. The bulk density may be calculated by filling a support to be measured in a 5-mL cylinder, measuring a volume by reading the graduations, and then dividing the weight determined on the scale by the previously measured volume.

The shape of the support is not particularly limited, but may be spherical or in the form of potato. In addition, the support may have a porous structure, a molecular sieve structure, a honeycomb structure, or the like so as to have a relatively high surface area per unit mass or unit volume.

The carbon source may be at least one selected from the group consisting of C₄ to C₂₀ carboxylic acid, glucose, lactose, glucose, cellulose, sucrose, sugar polymer, carbohydrate, urea, thiourea, ethylene glycol, and glycerol. The C₄ to C₂₀ carboxylic acid may be one or more multicarboxylic acid selected from dicarboxylic acid, tricarboxylic acid, and tetracarboxylic acid, and include saturated carboxylic or polycarboxylic acid such as oxalic acid, citric acid, glycolic acid, lactic acid, tartaric acid, malic acid, succinic acid, glycolic acid, malonic acid, glutaric acid, adipic acid, isocitric acid, oxalosuccinic acid, and tricarbalic acid, and unsaturated carboxylic or polycarboxylic acid such as maleic acid, fumaric acid, and aconitic acid.

In the immersing of the carbon source, a solvent may be further used along in addition to the organic acid. The solvent may be one that may dilute the organic acid and be easily removed in a subsequent drying process, and for example, water, or an alcohol solvent such as ethanol, methanol, or butanol may be used, but the solvent is not limited thereto.

The carbon source may be used in an amount of 5 to 50 part by weight, specifically 10 to 40 parts by weight, more specifically 15 to 30 parts by weight, with respect to 100 parts by weight of the support. When the amount of the carbon source used is too small, a carbon coating formed on the support may not be properly formed, and when the amount of the carbon source used is excessive, the immersing of the support may not be performed well.

In an embodiment of the present invention, after supporting the carbon source on the support, drying may be performed to first remove the solvent of a solution containing the carbon source to efficiently convert the carbon source into a carbon coating on a surface of the support.

That is, the immersing of the carbon source in the support in step (S1) may specifically include (S1-1) mixing a support and a solution containing a carbon source; and (S1-2) drying the mixture obtained in the above step.

The drying in this step may be performed through a facility commonly used for drying, and may be performed under normal or reduced pressure conditions. When the drying is performed under normal pressure, the drying may be performed through equipment such as an oven, and when the drying is performed under reduced pressure, the drying may be performed through equipment such as a dryer equipped with reduced pressure equipment. When the drying is performed under reduced pressure, the pressure may be 10 mbar to 100 mbar, preferably 50 mbar to 100 mbar. When the drying is performed under reduced pressure within the above-described pressure range, benefits are that more solvents may be removed.

The temperature at which the drying is performed may be 50 °C to 200 °C, specifically 100 °C to 150 °C in the case of normal pressure drying, and 50 °C to 100 °C in the case of reduced pressure drying. Since the drying under reduced pressure is easier, the temperature in reduced pressure drying may be lower than that of normal pressure drying. The solvent of the catalyst supporting solution may be more smoothly removed under the above-described temperature conditions, the solvent may not be sufficiently removed when the temperature is too low, and when the temperature is too high, the solvent may be sufficiently removed but the catalyst component or the support may be lost.

The drying time may be 1 hour to 10 hours, specifically 2 hours to 8 hours, more specifically 3 hours to 8 hours.

### (S2) Firing support in which carbon source is immersed to prepare support coated with carbon

In step (S2), a support in which a carbon source is immersed is fired to prepare a support coated with carbon.

The firing temperature in step (S2) may be 450 to 950 °C, specifically 500 to 950 °C, 500 to 900 °C, 600 to 900 °C, and more specifically 700 to 900 °C. According on the firing temperature, a carbon coating formed on a surface of the support may have changes in surface area and amount thereof, and with an increase in the firing temperature, the carbon source is further carbonized, the support coated with carbon has reduced surface area, and carbon content of the carbon coating formed on the support coated with carbon is reduced. In addition, when the firing temperature is excessively increased, a structure of the support may collapse and thus pore volume may be reduced. Accordingly, when the above firing temperature is satisfied, the surface area, carbon content, and pore volume of the prepared carbon-coated support may satisfy appropriate ranges, and when a catalyst for preparing carbon nanotubes is prepared using the carbon-coated support described above, the prepared catalyst for preparing carbon nanotubes may exhibit excellent manufacturing yields.

The firing in step (S2) may be performed for 0.5 to 3 hours, preferably 0.5 to 2 hours. When the firing time is too short, the carbon source may not be sufficiently converted into the carbon coating, and when the firing time is too long, structural collapse of the support may be caused or the surface area of the carbon-coated support and the carbon content of the carbon coating may be reduced below an appropriate level.

The carbon-coated support prepared in this way will include the carbon coating in an amount of 0.1 to 3.0 parts by weight, specifically 0.1 to 2.0 parts by weight, more specifically 0.5 to 1.5 parts by weight, with respect to 100 parts by weight of the carbon-coated support. When the amount of carbon coating of the carbon-coated support satisfies the above range, the catalyst for preparing carbon nanotubes has appropriate pores and excellent catalyst dispersibility, and may thus exhibit excellent carbon nanotube preparation yield. When the amount of carbon coating is too small, the effect of improving carbon nanotube yield when carbon nanotubes are prepared using a carbon nanotube catalyst prepared using the carbon-coated support is insignificant, and when the amount of carbon coating is excessive, pores of the support may be blocked to degrade the dispersibility of the supported catalyst. The amount of carbon coating refers to an amount of carbon applied onto the support.

The firing in step (S2) may be performed in a reducing atmosphere, and accordingly, a carbon coating may be formed on the surface and pores of the support to prepare a carbon-coated support. The reducing atmosphere may be created through the decomposition of carbon source that decomposes at the temperature at which firing is performed.

After preparing and obtaining the carbon-coated support through steps (S1) and (S2), the carbon-coated support is used as a support on which the catalyst for preparing carbon nanotubes is supported to prepare a supported catalyst for preparing carbon nanotubes.

(S3) mixing the carbon-coated support and the catalyst supporting solution and (S4) firing the mixture to prepare a supported catalyst may be performed through typical methods for preparing a supported catalyst for preparing carbon nanotubes, except that the carbon-coated support prepared by performing steps (S1) and (S2) instead of typical supports is used as a support on which a catalyst is supported.

### (S3) Mixing carbon-coated support and catalyst supporting solution to prepare mixture

In an embodiment of the present invention, in step (S3), the carbon-coated support obtained in step (S2) and a catalyst supporting solution is mixed to prepare a mixture.

The catalyst supporting solution is used to support an active component, which serves as a substantial catalyst, on the carbon-coated support, and may include a main catalyst component capable of exhibiting catalytic activity and a cocatalyst component capable of increasing the catalytic activity of the main catalyst component.

The main catalyst component may be at least one selected from the group consisting of Co, Ni, and Fe, and preferably Co. The main catalyst component serves to lower the activation energy of the reaction of forming carbon nanotubes through decomposition of carbon source gases so that the reaction is performed well, and the main catalyst components listed above provide benefits such as high catalytic activity and excellent durability.

The main catalyst component may be included in the form of a precursor in the catalyst supporting solution. Specifically, the main catalyst precursor may include a halide, a nitride, an oxide, a nitric oxide, a sulfur oxide, a sulfide, a hydroxide, a metal salt, or the like of the main catalyst component, and more specifically, in the case of Co, Co(NO₃)₂ · 6H₂O, CO₂(CO)₈, [Co₂(CO)₆(t-BuC=CH)], Co(OAc)₂, or CoCl₂ · 6H₂O may be used, in the case of Fe, Fe(NO₃)₂ · 6H₂O, Fe(NO₃)₂ · 9H₂O, Fe(NO₃)₃, Fe(OAc)₂, FeSO₄ · 7H₂O, or FeCl₂ · 4H₂O may be used, and in the case of Ni, Ni(NO₃)₂ · 6H₂O, NiCl₂ · 2H₂O, Ni(CO)₄, or Ni(OAc)₂. 4H₂O may be used. When the main catalyst precursor listed above is used, benefits are that a catalyst having a high activity may be prepared while minimizing the loss of the main catalyst component during subsequent drying and firing process.

The cocatalyst component may be at least one selected from the group consisting of Mo and V, and preferably V. The cocatalyst component serves to increase the dispersibility of the main catalyst component to further increase the activity of a catalyst, and benefits are that the cocatalyst components listed above have a high synergistic effect with the cocatalyst components described above and are easily supported on the support.

The cocatalyst component may also be included in the catalyst supporting solution in the form of a precursor. Specifically, the cocatalyst precursor may include a halide, a nitride, an oxide, a nitric oxide, a sulfur oxide, a sulfide, a hydroxide, a metal salt, or the like of the cocatalyst component, and more specifically, in the case of Mo, ((NH₄)₆Mo₇O₂₄ · 4H₂O, Mo(CO)₆, (NH₄) MoS₄, or MoO₃ may be used, and in the case of V, NH₄VO₃, NaVO₃, V(CO)₆, V₂SO₄ · 7H₂O, V₂O₃, or V₂O₅ may be used. The precursors listed above are relatively easy to be obtained and easily converted to an oxide form, and thus are beneficial.

The catalyst supporting solution may further include a solvent capable of dissolving the main catalyst precursor and the cocatalyst precursor. The solvent of the catalyst supporting solution may be any solvent as long as it may dissolve the main catalyst precursor and the cocatalyst precursor as described above and be easily removed in a subsequent drying process, and for example, water, an alcohol solvent such as ethanol, methanol, or butanol, an aromatic hydrocarbon solvent such as toluene or xylene, or the like may be used, but the solvent is not limited thereto.

A molar ratio between the main catalyst component and the cocatalyst component in the catalyst supporting solution may be 10:0.1 to 10:10, preferably 10:0.5 to 10:5. When the molar ratio between the main catalyst component and the cocatalyst component satisfies the above-described conditions, the synergistic effect between the two components may be maximized, and specifically, aggregation of active components in the support may be minimized to maximize the activity of catalyst.

In the catalyst supporting solution, an organic acid may be further included in addition to the main catalyst precursor and the cocatalyst precursor. The organic acid used in the present invention may be, for example, a multicarboxylic acid, which is a compound containing at least one carboxyl group, and has high solubility as a complexing agent, inhibits precipitation, facilitates synthesis of catalyst, and increases synthesis of carbon nanotubes as an activator. The multicarboxylic acid may be at least one selected from dicarboxylic acid, tricarboxylic acid, and tetracarboxylic acid, and for example, citric acid, oxalic acid, malonic acid, succinic acid, tartaric acid, or the like may be used.

The organic acid may be included in an amount of 0.1 wt% to 1.5 wt% with respect to the total weight of the catalyst supporting solution. In this range, the metal components of the main catalyst and the cocatalyst are not precipitated in the catalyst solution, and cracks caused in the subsequent firing process may also be prevented.

In addition, the sum of the main catalyst precursor and the cocatalyst precursor and the organic acid may be appropriately mixed in a molar ratio range of about 5:1 to 30:1, and when the molar ratio is satisfied, the bulk density of carbon nanotubes synthesized from the prepared supported catalyst may be further increased.

In an embodiment of the present invention, the step (S3) may include (S3-1) mixing a carbon-coated support and a catalyst supporting solution to prepare a mixture; and (S3-2) drying the mixture.

The support and the catalyst supporting solution may be mixed such that the main catalyst component is in an amount of 1 wt% to 30 wt%, preferably 3 wt% to 20 wt%, more preferably 5 wt% to 15 wt%, with respect to the total weight of the supported catalyst for preparing carbon nanotubes prepared in step (S3-1). When the amount of the main catalyst component is in the above-described range, catalytic activity may be maximized.

Through the drying of the mixture in step (S3-2), the solvent of the catalyst supporting solution is removed, and accordingly, the main catalyst and cocatalyst precursor of the catalyst supporting solution mixed with the carbon-coated support and immersed in the carbon-coated support may be more efficiently converted into an oxide form in the subsequent firing step.

The drying in this step may be performed through a facility commonly used for drying, and may be performed under normal or reduced pressure conditions. When the drying is performed under normal pressure, the drying may be performed through equipment such as an oven, and when the drying is performed under reduced pressure, the drying may be performed through equipment such as a dryer equipped with reduced pressure equipment. When the drying is performed under reduced pressure, the pressure may be 10 mbar to 100 mbar, preferably 50 mbar to 100 mbar. When the drying is performed under reduced pressure within the above-described pressure range, benefits are that more solvents may be removed.

The temperature at which the drying is performed may be 50 °C to 200 °C, particularly 100 °C to 150 °C in the case of normal pressure drying, and 50 °C to 100 °C in the case of reduced pressure drying. Since the drying under reduced pressure is easier, the temperature in reduced pressure drying may be lower than that of normal pressure drying. The solvent of the catalyst supporting solution may be more smoothly removed under the above-described temperature conditions, the solvent may not be sufficiently removed when the temperature is too low, and when the temperature is too high, the solvent may be sufficiently removed but the catalyst component or the support may be lost.

The drying time may be 1 hour to 10 hours, specifically 2 hours to 8 hours, more specifically 3 hours to 8 hours.

The solvent is removed sufficiently through the previous drying step, and then the dried mixture may be fired to obtain a final catalyst. During the firing process, the main catalyst and cocatalyst precursor components on the surface and inside of the support may be converted into oxides, thereby having catalytic activity.

The firing may be performed at a temperature of 300 to 800 °C, specifically 600 to 800 °C, more specifically 650 to 750 °C. In addition, the firing may be performed for 0.5 hours to 3 hours, preferably 1 hour to 2 hours. When the firing temperature in this step is too low or the firing time is too short, the catalyst precursor may not be sufficiently converted into an oxide form, and when the firing temperature is too high or the firing time is too long, the structural collapse of the support or the elimination of the supported cocatalyst and main catalyst components may be caused.

The main catalyst component of the catalyst for preparing carbon nanotubes prepared through up to this step may be in an amount of 5 wt% to 20 wt%, preferably 10 wt% to 15 wt%. The amount of the main catalyst component may be calculated by dividing the mass of the main catalyst component in a main catalyst precursor introduced during the preparation process by the mass of a finally obtained catalyst, and separately, may also be calculated by measuring the amount of the main catalyst component in catalyst particles through ICP-OES analysis.

The catalyst for preparing carbon nanotubes of the present invention may be useful in the preparation of carbon nanotubes. For example, carbon nanotubes may be prepared through a method including introducing the catalyst for preparing carbon nanotubes into a chemical vapor deposition reactor, injecting a carbon source gas into the reactor, and then heating the reactor to synthesize carbon nanotubes.

The carbon source gas that may be used in the preparation of carbon nanotubes is a carbon-containing gas that may be decomposed at high temperature to form carbon nanotubes, and specific examples of the carbon-containing gas may include various carbon-containing compounds such as aliphatic alkanes, aliphatic alkenes, aliphatic alkynes, and aromatic compounds, and more specific examples of the carbon-containing gas may include compounds such as methane, ethane, ethylene, acetylene, ethanol, methanol, acetone, carbon monoxide, propane, butane, benzene, cyclohexane, propylene, butene, isobutene, toluene, xylene, cumene, ethylbenzene, naphthalene, phenanthrene, anthracene, acetylene, formaldehyde, and acetaldehyde.

In the preparation of carbon nanotubes, a flowing gas may be injected into the chemical vapor deposition reactor along with the carbon source gas. The flowing gas is for imparting fluidity of carbon nanotubes, which are synthesized in the fluidized bed reactor, and catalyst particles, and a gas having high thermal stability without reacting with carbon source gases or carbon nanotubes may be used. For example, a nitrogen gas or an inert gas may be used as the flowing gas.

In addition, in the preparation of carbon nanotubes, a reducing gas may be injected along with the carbon source gas and flowing gas. The reducing gas may further promote the decomposition of the carbon source gas, and for example, a hydrogen gas may be used as the reducing gas.

The heating in the synthesizing of carbon nanotubes may be to bring the temperature inside the reactor to 600 to 800 °C. When the temperature in the reactor is within the above-described range, the carbon source gas may be easily decomposed to easily synthesize carbon nanotubes. When the temperature is less than the above-described range, there may be a limitation in that carbon nanotubes are not well prepared, and when the temperature is greater than the above-described range, there may be a limitation in that costs are high for heating and catalyst particles themselves may also be decomposed.

The carbon nanotubes prepared using the catalyst for preparing carbon nanotubes may have a bulk density of 20 kg/m³ or greater, specifically 23 kg/m³ or greater, more specifically, 24 kg/m³ or greater, and may have a bulk density of 50 kg/m³ or less, specifically, 45 kg/m³ or less, more specifically 42 kg/m³ or less.

Hereinafter, the present invention will be described in detail with reference to Examples and Experimental Examples, but the present invention is not limited by these Examples and Experimental Examples. Examples according to the present invention may be modified into other various forms, and the scope of the present invention should not be construed as being limited to the Examples described below. Examples of the present invention are provided to more fully describe the present invention to those skilled in the art.

### Example 1

A boehmite support having a specific surface area of 190 m²/g and a D₅₀ of 50 µm was prepared. 50 g of the boehmite support was immersed in a solution of 10 g of citric acid and 100 g of water at 120 °C for 4 hours to complete mixing. The mixture was dried for 5 hours at normal pressure and 120 °C, and then fired at 900 °C for 1 hour in a double-structured container in which gas flowing inside is absorbed into carbon nanotubes and purified to prepare a carbon-coated support.

16 g of cobalt precursor Co(NO₃)₂ · 6H₂O and 0.63 g of vanadium precursor NH₄VO₃ were mixed and dissolved in 21 g of distilled water to prepare a catalyst support solution. 20 g of the carbon-coated support prepared above was added to the prepared catalyst supporting solution and mixed. After the mixing was completed, the mixture was dried at normal pressure and 120 °C for 5 hours and then fired at 680 °C for 1 hour to obtain a catalyst.

### Examples 2 to 4 and Comparative Example 1

A catalyst was obtained in the same manner as in Example 1, except that the firing temperature in the preparation of carbon-coated support was altered instead of 900 °C, as shown in Table 1 below.

### Comparative Example 2

16 g of cobalt precursor Co(NO₃)₂ · 6H₂O and 0.63 g of vanadium precursor NH₄VO₃ were mixed and dissolved in 21 g of distilled water to prepare a catalyst support solution. 20 g of boehmite support having a specific surface area of 190 m²/g and D50 of 50µm was added to the prepared catalyst supporting solution and mixed. After the mixing was completed, the mixture was dried at normal pressure and 120 °C for 5 hours and then fired at 680 °C for 1 hour to obtain a catalyst.

### Experimental Example 1

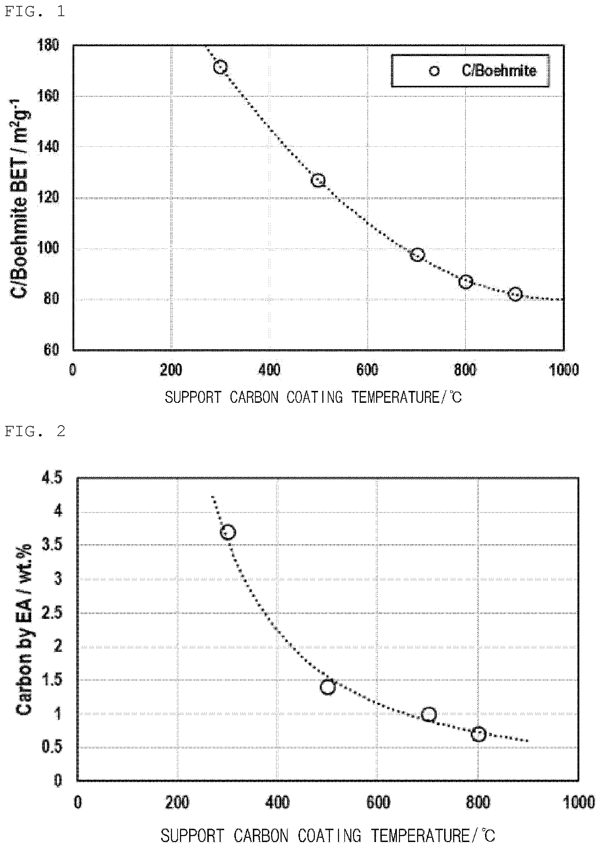

The carbon-coated supports and catalysts prepared in Examples 1 to 4 and Comparative Examples 1 and 2 were analyzed and shown in Table 1 and FIGS. 1 to 3 below.
(1) BET specific surface area and barrett-joyner-halenda (BJH) pore size
   The amount of nitrogen gas adsorption under liquid nitrogen temperature (77K) was measured through a BET 6-point method using BELSORP-mini II from BEL Japan.
(2) EA analysis
   i) Furnance 900 °C, oven 65 °C
   ii) Gas flow carrier (He): 140 mL/min, Oxygen: 250 mL/min, Reference(He): 100 mL/min
   iii) System timing cycle (run time): 720 sec, Sampling delay: 12 sec, Oxygen injection end: 5 sec
   iv) Detector level: 1000 µA
(3) ICP Co content

The content of Co was determined through atomic emission spectroscopy (ICP, ICP-OES, Optima 5300DV).

**[Table 1]**

| | Firing temperature (°C) | Carbon-coated support | | Supported catalyst | |
|---|---|---|---|---|---|
| | | BET Specific surface area (m²/g) | Pore volume (cm³/g) | BET specific surface area (m²/g) | BJH pore volume (m²/g) |
| Example 1 | 900 | 82.32 | 0.22 | 58.97 | 63.67 |
| Example 2 | 800 | 87.00 | 0.23 | 60.23 | 64.19 |
| Example 3 | 700 | 97.84 | 0.23 | 65.83 | 70.28 |
| Example 4 | 500 | 126.95 | 0.21 | 75.62 | 81.05 |
| Comparative Example 1 | 300 | 171.89 | 0.13 | 74.99 | 80.06 |
| Comparative Example 2 | - | - | - | 100.40 | 113.15 |

**[Table 2]**

| | Firing temperature (°C) | Carbon content of carbon-coated support (wt%) | Co content of supported catalyst (wt%) |
|---|---|---|---|
| Example 1 | 900 | N/D | 12.8 |
| Example 2 | 800 | 0.7 | 13.3 |
| Example 3 | 700 | 1.0 | 13.6 |
| Example 4 | 500 | 1.4 | 13.2 |
| Comparative Example 1 | 300 | 3.7 | 13.9 |
| Comparative Example 2 | - | - | 13.6 |

Referring to Tables 1 and 2 and FIGS. 1 and 2, it is seen that the specific surface area and carbon content of the carbon-coated support is reduced as firing is performed at a higher temperature when forming a carbon coating on a support. Accordingly, it is seen that an increase in the firing promotes carbonization, resulting in reduced surface area and reduced content of the carbon coating formed on a surface of the support.

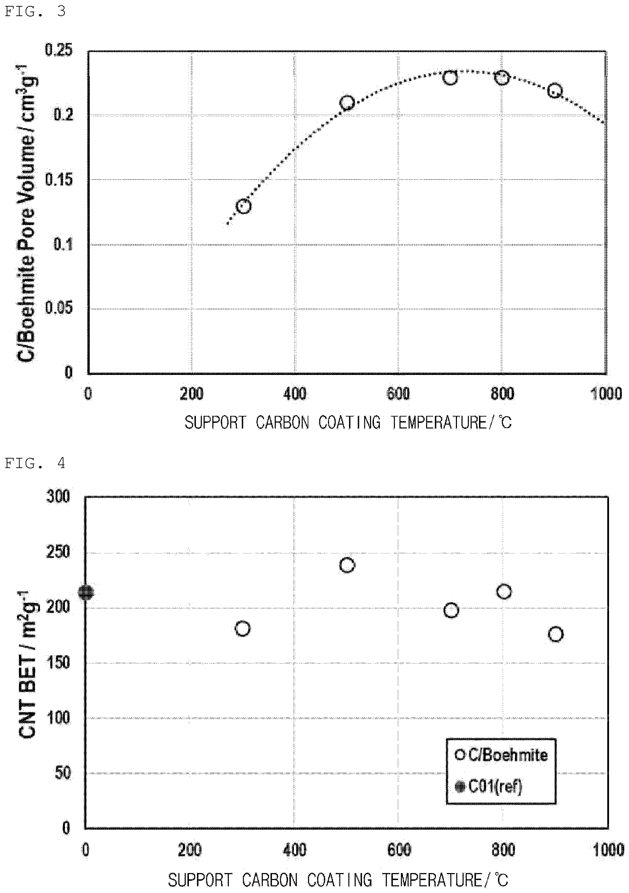

In addition, referring to Tables 1, 2 and FIG. 3, it is seen that when forming the carbon coating on the support, the pore volume of the support gradually increases with the increase in the firing temperature, but above a certain temperature, the pore volume is reduced. Accordingly, it is seen that when the firing temperature was too high, structure of the support collapses, causing reduced pore volume.

Accordingly, it is seen that the specific surface area and carbon content of the carbon-coated support may be regulated by adjusting the firing temperature when forming the carbon coating on the support.

### Experimental Example 2

Carbon nanotubes were prepared using the catalysts prepared in Examples 1 to 4 and Comparative Examples 1 and 2, and physical properties thereof were analyzed and shown in Table 3 and FIGS. 4 to 6 below.

The catalysts prepared in Examples and Comparative Examples were introduced into a chemical vapor deposition reactor, and nitrogen, hydrogen, and ethylene gases were introduced into the reactor at a volume ratio of 1:1:1. Then, carbon nanotubes were synthesized by setting the temperature inside the reactor to 680 °C. The bulk density and yield of the obtained carbon nanotubes were measured and summarized in Table 3 below, and the bulk density and yield were measured through the following method.
(1) Yield: Yield was calculated through the following equation. Yield = (Total weight of prepared carbon nanotubes - Weight of catalyst used for preparation / Weight of catalyst used for preparation)
(2) Bulk density: The prepared carbon nanotube powder was filled in a 5-mL cylinder, the volume was measured by reading the graduations, and then the weight of the carbon nanotubes determined on the scale was divided by the previously measured volume to calculate the bulk density.

**[Table 3]**

| | Yield (times) | BET specific surface area (m²/g) | Bulk density (kg/m³) |
|---|---|---|---|
| Example 1 | 19.47 | 176.68 | 34.41 |
| Example 2 | 20.48 | 215.50 | 29.59 |
| Example 3 | 16.67 | 198.10 | 40.56 |
| Example 4 | 10.19 | 238.95 | 35.24 |
| Comparative Example 1 | 4.63 | 177.21 | 42.13 |
| Comparative Example 2 | 9.16 | 214.20 | 23.79 |

As may be seen in Table 3, it is seen that carbon nanotubes were prepared at a higher yield when the catalyst of Examples 1 to 4 was used than when the catalyst of Comparative Examples 1 and 2 was used. As shown in FIG. 4, the carbon nanotubes prepared using the catalysts of Examples 1 to 4 showed a BET specific surface area at the same level as the carbon nanotubes prepared using the catalysts of Comparative Examples 1 and 2.

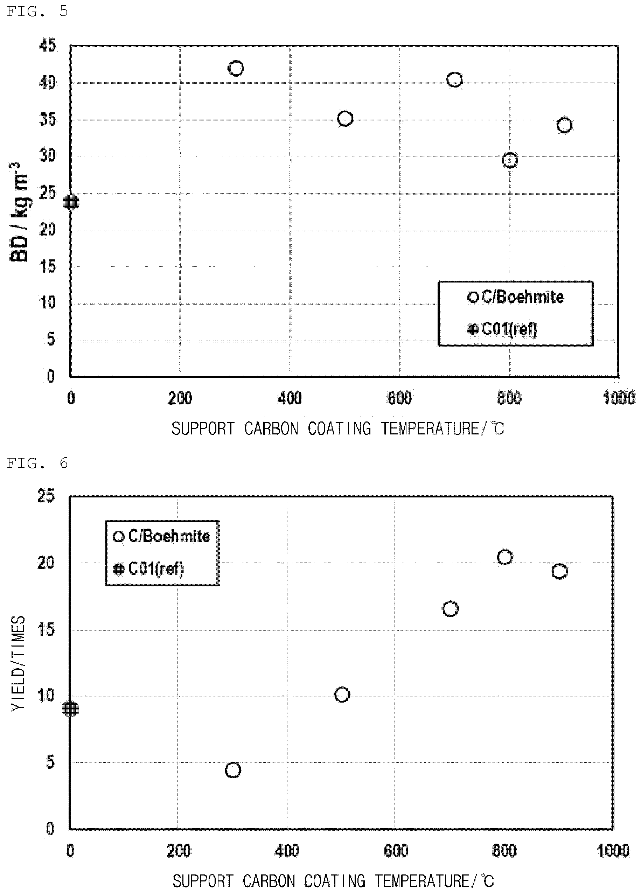

As may be seen in FIG. 5, when preparing carbon nanotubes using the catalyst for preparing carbon nanotubes prepared using a carbon-coated support, the prepared carbon nanotubes exhibit high bulk density, and accordingly, a larger amount of carbon nanotubes may be synthesized in the same reactor volume. However, as may be seen in FIG. 6, in the catalyst for preparing carbon nanotubes prepared using the carbon-coated support on which a carbon coating is formed at a low firing temperature as in Comparative Example 1, the excess carbon blocked the pores of the support to impair the dispersibility of the catalyst, and accordingly, yield was greatly reduced.

## Claims

1. A catalyst for preparing carbon nanotubes, the catalyst comprising:
a support coated with carbon; and
a main catalyst component and a cocatalyst component supported on the support,
wherein the support comprises a carbon coating in an amount of 0.1 to 3.0 parts by weight with respect to 100 parts by weight of the support.

2. The catalyst of claim 1, wherein the support coated with carbon has a BET specific surface area of 70 to 150 m²/g.

3. The catalyst of claim 1, wherein the support coated with carbon has a pore volume of 0.18 to 0.30 cm³/g.

4. The catalyst of claim 1, wherein the support coated with carbon comprises a carbon coating in an amount of 0.1 to 2.0 parts by weight with respect to 100 parts by weight of the support.

5. The catalyst of claim 1, wherein the catalyst for preparing carbon nanotubes has a specific surface area of 50 to 90 m²/g.

6. A method for preparing a catalyst for preparing carbon nanotubes, the method comprising:
(S1) immersing a carbon source in a support;
(S2) firing the support in which the carbon source is immersed to prepare a carbon-coated support;
(S3) mixing the carbon-coated support and a catalyst supporting solution to prepare a mixture; and
(S4) firing the mixture to prepare a supported catalyst,
wherein the firing temperature in step (S2) is 450 to 950 °C.

7. The method of claim 6, wherein the carbon source is at least one selected from the group consisting of C₄ to C₂₀ carboxylic acid, glucose, lactose, glucose, cellulose, sucrose, sugar polymer, carbohydrate, urea, thiourea, ethylene glycol, and glycerol.

8. The method of claim 6, wherein the step (S1) comprises (S1-1) mixing a support and a solution containing a carbon source; and
(S1-2) drying the mixture obtained in the above step.

9. The method of claim 8, wherein the drying in step (S1-2) is performed at a temperature of 50 to 200 ° C.

10. The method of claim 6, wherein the carbon-coated support prepared through the firing in step (S2) comprises a carbon coating in an amount of 0.1 to 3.0 parts by weight with respect to 100 parts by weight of the support.

11. The method of claim 6, wherein the firing in step (S2) is performed in a reducing atmosphere.

12. The method of claim 6, wherein the step (S3) comprises (S3-1) mixing the carbon-coated support and a catalyst supporting solution to prepare a mixture; and
(S3-2) drying the mixture.

13. The method of claim 12, wherein the drying in step (S3-2) is performed at a temperature of 50 to 200 ° C.

14. The method of claim 6, wherein the firing in step (S4) is performed in a reducing atmosphere.

15. The method of claim 6, wherein the firing temperature in step (S4) is 300 to 800 °C.
